(19) Europäisches Patentamt
European Patent Office
Office européen des brevets

(11) **EP 1 220 355 B1**

(12) **EUROPEAN PATENT SPECIFICATION**

(45) Date of publication and mention
of the grant of the patent:
**19.09.2007 Bulletin 2007/38**

(51) Int Cl.:
*H01Q 25/00* (2006.01)     *H04B 7/08* (2006.01)
*H04B 1/707* (2006.01)

(21) Application number: **00938467.8**

(22) Date of filing: **22.06.2000**

(86) International application number:
**PCT/CN2000/000170**

(87) International publication number:
**WO 2001/013466 (22.02.2001 Gazette 2001/08)**

(54) **A METHOD OF CANCELING INTERFERENCE BASED ON SMART ANTENNA**

VERFAHREN ZUM BESEITIGEN VON INTERFERENZEN MIT HILFE VON EINER INTELLIGENTEN ANTENNE

PROCEDE D'ELIMINATION DES INTERFERENCES FAISANT APPEL A UNE ANTENNE INTELLIGENTE

(84) Designated Contracting States:
**AT BE CH CY DE DK ES FI FR GB GR IE IT LI LU MC NL PT SE**

(30) Priority: **11.08.1999   CN 99111371**

(43) Date of publication of application:
**03.07.2002   Bulletin 2002/27**

(73) Proprietor: **China Academy of Telecommunications Technology
Haidian District,
Beijing 100083 (CN)**

(72) Inventors:
• **LI, Feng
Beijing 100083 (CN)**
• **LI, Shihe
Beijing 100083 (CN)**

(74) Representative: **Mounteney, Simon James et al
Marks & Clerk
90 Long Acre
London WC2E 9RA (GB)**

(56) References cited:
**EP-A- 0 647 982        EP-A- 0 849 888
EP-A- 0 896 441        WO-A-98/38805
CN-A- 1 220 562        CN-C- 1 053 313
DE-A- 4 329 320        GB-A- 2 281 011
US-A- 5 621 752**

• **BLANZ J.J. ET AL: 'Smart antenna concepts for time-slotted CDMA' VEHICULAR TECHNOLOGY CONFERENCE, 1997 IEEE 47TH vol. 1, 04 May 1997, pages 11 - 15**
• **BLANZ J. ET AL: 'Performance of a cellular hybrid C/TDMA mobile radio system applying joint detection and coherent receiver antenna diversity' SELECTED AREAS IN COMMUNICATIONS, IEEE JOURNAL ON vol. 12, no. 4, pages 568 - 579**

**Description**

**Field of the Technology**

The present invention relates generally to a wireless communication technology, and more particularly to a cancellation processing technology of interference in wireless base station with smart antenna or in user terminal.

**Background of the Invention**

In modern wireless communication system, especially in CDMA wireless communication system, in order to raise system capacity, to raise system sensitivity and to have farther communication distance with lower emission power, smart antenna is used, in general.

In the Chinese patent named "Time Division Duplex Synchronous Code Division Multiple Access Wireless Communication System with Smart Antenna" (CN 97 1 04039.7), a base station structure of wireless communication system with smart antenna is disclosed. It includes antenna array consisted of one or plural antenna units, corresponding radio frequency feeder cables and a set of coherent radio frequency transceivers. According to each antenna unit's different response to signal, coming from user terminal, baseband processor gets space characteristic vector and direction of arrival (DOA) of the signal; then with correspondence algorithm, receiving antenna beam forming is implemented. Among them, any antenna unit, corresponding radio frequency feeder cable and coherent radio frequency transceiver together is called a link. By using weight, which is got from up link receiving beam forming of each link, for down link transmitting beam forming, whole functionality of smart antenna can be implemented, under symmetrical radio wave propagation.

The main part of modern wireless communication system is mobile communication. As mobile communication is working at a complex and variable environment (reference to ITU proposal M1225), severe influences of time-varying and multipath propagation have to be considered. In the patent said above and many disclosed technical documents concerning about beam forming algorithm of smart antenna, the conclusion is more functionality will be with more algorithm complexity. Nevertheless, under mobile communication environment, beam forming must be completed in real time, and algorithm-completed time is microsecond level. As limitation of modern microelectronic technology, digital signal processing (DSP) or application specific integrated circuit (ASIC) cannot implement too complex real time processing within such short time period.

Facing with the conflict said above, a simple maximum power composite algorithm, pointed to mobile communication system with code division multiple access, is used; it is not only simple, but also can solve time delay of multipath component composition within a chip width. Nevertheless, in modern CDMA mobile communication system under mobile environment, time delay of multipath propagation component is larger, amplitude of multipath propagation component is higher, so interference is still severe. This means under this mobile communication environment, simple and real time beam forming algorithm of smart antenna not only cannot solve the multipath propagation interference problem, but also cannot thoroughly solve system capacity problem of CDMA mobile communication system.

On the other hand, in order to solve interference problem of multipath propagation, people deeply study technologies such as Rake receiver and Joint Detection or said Multi User Detection and use them in mobile communication system of Code Division Multiple Access. Nevertheless, the Rake receiver or multiuser detection technology, said above, cannot be directly used in mobile communication system with smart antenna. The main reasons are: technology, based on Rake receiver or multiuser detection principle, processes CDMA signal of multi-code channel, composes or cancels main multipath components; but smart antenna technology makes beam forming pointed to each CDMA code channel separately, then after passing channel estimation and matched filter, signals of all users are once solved directly by inverting matrix.

There is a two-dimensional smart antenna technology, but it is in a research stage and its algorithm is immature and complex.

There is another method which processes multiuser detection after using smart antenna; but at this time as each code channel has been separated, processing multiuser detection must be separated for each code channel; the result is that not only cannot fully bring multiuser detection function into play, but also greatly increase complexity of baseband signal processing.

The publications BLANZ, J.J.; SCHMALENBERGER, R.; PAPATHANASSIOU, A.; JUNG, P: "Smart antenna concepts for time-slotted CDMA" VEHICULAR TECHNOLOGY CONFERENCE, 1997 IEEE 47TH, vol. 1, 4 May 1997 (1997-05-04), pages 11-15 and BLANZ, J.; KLEIN, A.; NASSHAN, M.; STEIL, A: "Performance of a cellular hybrid C/TDMA mobile radio system applying joint detection and coherent receiver antenna diversity" SELECTED AREAS IN COMMUNICATIONS, IEEE JOURNAL ON, vol. 12, no. 4, pages 568-579 disclose examples for combining multiuser detection with beamforming.

The US Patent: "Adaptive sectorization in a spread spectrum communication system" (No. 5,621,752; 1997) is also a smart antenna scheme that has been developed and applied in recent years in order to raise performance of a mobile communication system, but the effect is same as the China Patent No. 97 1 04039.7 mentioned above; they only use the beam forming technique and taking different gains at different directions to decrease interference coming from other terminals or neighbor cells. This means that the interference outside the beam main lobe is greatly decreased, but the interference inside the beam main lobe, such as coming from main path and multipath of other code channels and those parts of the neighbor cells and other systems interference that is inside the beam, does not decreased or canceled.

**Summary of the Invention**

In order to have higher system capacity and better performance for CDMA wireless communication system, it is necessary to search for a simple and real time interference cancellation method convenient for being used in CDMA wireless communication based on smart antenna.

Therefore, an object of the invention is to provide an interference cancellation method for a base station or a terminal that are in a communication system based on smart antennas. While CDMA mobile communication or other mobile communication system uses smart antenna and simple maximum power composite algorithm, various kinds of interference can be canceled as much as possible and a better effect can be got.

The invention of an interference cancellation method based on smart antenna, said method being applied in a base station of a CDMA communications system and said base station including N antenna units, N radio feeder cables, N radio transceivers and a baseband signal processor, the method comprising:

a) With a beam forming matrix, obtained through receiving beam forming, making directly beam forming for sampling level digital signal of a radio receiver output, and after beam forming obtaining a digital signal of K code channels $NRk(m)$, wherein $k$ representing code channel and $m$ representing sample point;

b) Calculating main path signals, within $k^{th}$ code channel beam form, of other code channels except $k^{th}$ code channel, and then subtracting Step a) digital signal $NRk(m)$ with said main path signal to obtain a digital signal $NSk(m)$ that only including main path and multipath signal of $k^{th}$ code channel and multipath interference signal of other code channels;

c) Searching in said digital signal $NSk(m)$ of Step b) to obtain multipath interference signal distributed on beam form direction of $k^{th}$ code channel and come from other code channels except $k^{th}$ code channel;

d) Subtracting digital signal $NSk(m)$ of Step b) with said multipath interference signal coming from other code channels to obtain a sampling level digital signal of $k^{th}$ code channel that having canceled main path interference signals and multipath interference signals of other code channels;

e) Obtaining a code chip level digital signal from said sampling level digital signal of Step d) and superposing in phase coincidence main path and multipath signals of $k^{th}$ code channel, then de-scrambling, de-spreading and de-modulating said superposed signal to obtain a receiving signal, with interference canceled, of $k^{th}$ code channel.

Before Step a), further comprising:

Synchronizing and eliminating over sample of sampling level digital signal of a radio receiver output to obtain a code chip level digital signal;

De-scrambling and de-spreading said code chip level digital signal to obtain symbolic level signals of K code channels;

With combined algorithm of beam forming, making receiving beam form for said symbolic level signals of K code channels to obtain a combined result;

De-modulating said combined result and detecting a signal-to-noise ratio (SNR) of its training sequence; if said SNR being greater than a threshold set by said system, outputting directly de-modulated signal as receiving signal and ending, otherwise going to Step a).

Said beam forming algorithm is a maximum power combined algorithm.

Said steps b), c) and d) are processing on a sampling level.

Calculating main path signals, within $k^{th}$ code channel beam form, of other code channels except $k^{th}$ code channel in Step b), comprising:

Calculating a signal level, within said $k^{th}$ code channel beam form, of other code channels except $k^{th}$ code channel;

Calculating total power, within said $k^{th}$ code channel beam form, of other code channels except $k^{th}$ code channel, according to said signal level;

Comparing said total power with a threshold set by said system, and if a total power of a signal being greater than said threshold, then determining the signal being a main interference signal to be canceled, from other code channels except $k^{th}$ code channel;
Spreading said signal to be canceled with a spread code, and adding a known scramble code to recover a main path signal, within $K^{th}$ code channel beam form, of other code channels except $K^{th}$ code channel.

Searching in said digital signal $NSk(m)$ in Step c), comprising:

Obtaining a code chip level signal by moving sampling point position one by one within a symbol;
Calculating a correlation of said code chip level signal with a known scramble code and calculating total energy;
Scrambling a signal, with total energy being greater than threshold, by a known scramble code and obtaining a multipath interference signal, distributed on beam form direction of $k^{th}$ code channel, of other code channels except $k^{th}$ code channel.

According to a first aspect of the invention, an interference cancellation method for a terminal of a CDMA communication system is set out in Claim 1.

Preferred features of this aspect are set out in Claims 2 to 4.

According to a second aspect of the invention, there is provided a method as set out in Claim 5. Preferred features of this aspect are set out in Claims 6 and 7.

In method of the invention, for CDMA mobile communication system having longer training sequence (Pilot or Midamble) in frame designed structure, as in real mobile communication system not all working code channels are severely influenced by multipath propagation etc., so signal quality can be pre-detected at smart antenna output, i.e., detecting signal-to-noise ratio (error code) in receiving training sequence (Pilot or Midamble); for channels there is no error code or numbers of error code are less than set value, then further processing is not needed, in this way numbers of channel needed to be further processed is greatly decreased and complexity of base band signal processing is greatly degraded.

In method of the invention, for CDMA mobile communication system having no longer training sequence (Pilot or Midamble) in frame designed structure, or for CDMA mobile communication system having longer training sequence (Pilot or Midamble) in frame designed structure but there are severe interference and severe error code channels, then it is necessary to use method of the invention to cancel multipath interference in order to have correct receiving.

Method of the invention proposes a simple maximum power composite algorithm, which makes beam forming in symbolic level and can be operated in real time.

Using new multipath interference cancellation technology proposed by the invention, most of multipath interference coming from this channel or other channels is canceled (multipath interference that is not canceled, has time delay with integer multiple of symbol width, but its appearing probability is low), so interference influence of multipath propagation etc. is canceled in a maximum limit and purpose of correct receiving is reached. Calculation volume of the invention is limited, with present commercial DSP it can be implemented thoroughly.

Although method of the invention points to mobile communication system with CDMA, but after simple variance it can be completely used in mobile communication system with frequency division multiple access (FDMA) and time division multiple access (TDMA).

## Brief Description of the Drawings

Figure 1 is a base station structure diagram of CDMA mobile communication with smart antenna.

Figure 2 is a principle diagram of signal-to-noise ratio detection and processing procedure of smart antenna output in Fig. 1.

Figure 3 is a flow chart of interference cancellation method of the invention.

Figure 4 is a structure diagram of user terminal for mobile communication.

## Embodiments of the invention

With embodiment and drawings, technology of the invention is described in detail in the following.

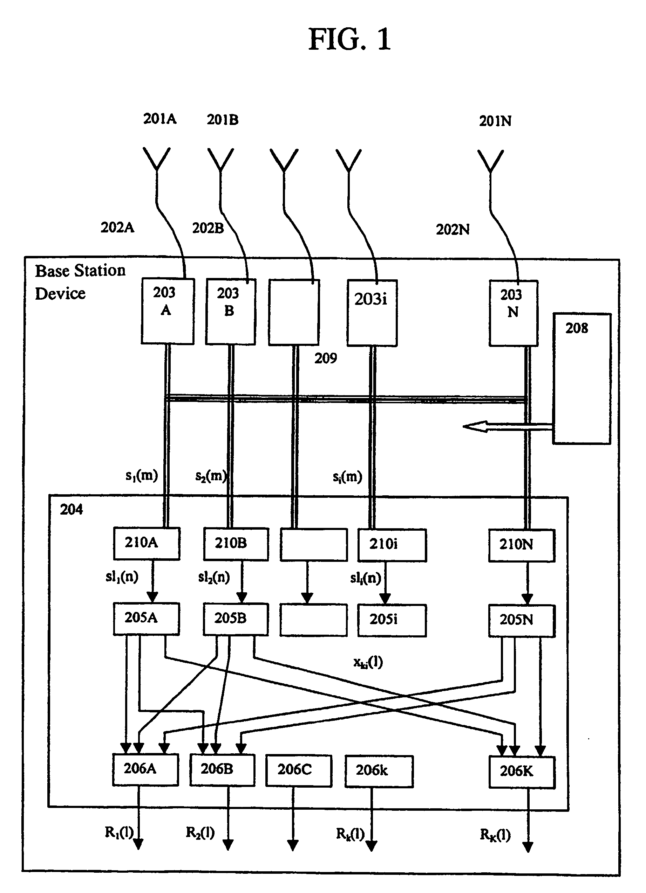

Referencing to Fig. 1, it shows a typical base station structure of wireless communication system such as mobile communication system or wireless user loop system etc. which with smart antenna It mainly includes $N$ identical antenna units 201A, 201B, ..., 201N; $N$ almost identical radio frequency feeder cables 202A, 202B, ..., 202N; $N$ radio frequency transceivers 203A, 203B, ..., 203N and a baseband signal processor 204. All radio frequency transceivers 203A, 203B, ..., 203N use a same local oscillator 208 to guarantee that each radio frequency transceiver works in coherence.

All radio frequency transceivers 203A, 203B, ..., 203N have Analog to Digital Converter (ADC) and Digital to Analog Converter (DAC), so input and output signals of baseband signal processor 204 are all digital signal; radio frequency transceivers 203A, 203B, ..., 203N are connected with baseband signal processor 204 by a high speed digital bus 209.

Basic working principle of base station with smart antenna and working method of smart antenna have been described in the Chinese patent named "Time Division Duplex Synchronous Code Division Multiple Access Wireless Communication System with Smart Antenna" (CN 97 1 04039.7), interference cancellation method for smart antenna receiving signal of the invention is also implemented in the base station structure. The invention does not make any changes of smart antenna working principle and characteristics, also the invention does not discuss transmitting signal processing and it only describes interference cancellation method for receiving signal.

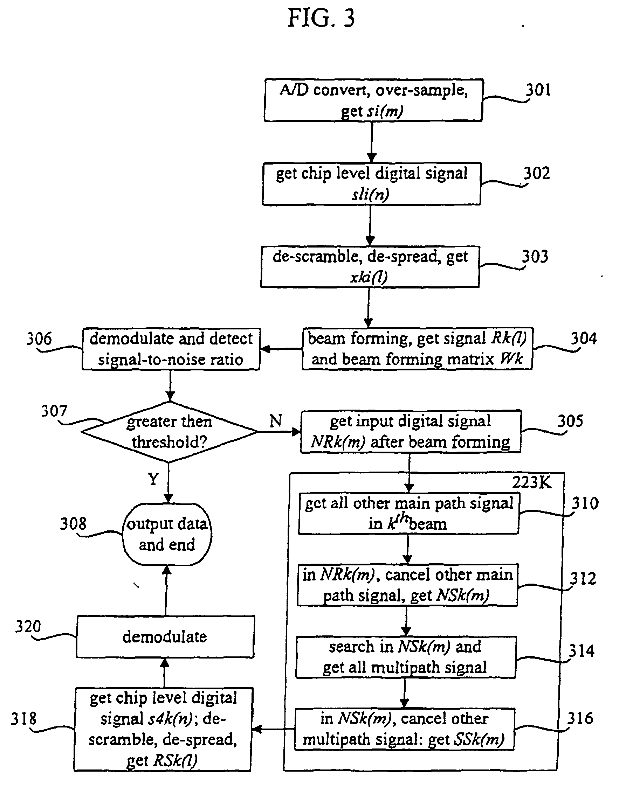

Referencing to Fig. 1 and steps 301 to 304 of Fig. 3, under base station structure, shown in Fig. 1, smart antenna working mode, implemented in baseband signal processor 204, is described. Suppose the CDMA wireless communication system is consisted of $K$ code channels, and the smart antenna system consist of $N$ antenna units, $N$ radio frequency feeder cables and N radio frequency transceivers, then $i^{th}$ receiving link is taken as an example for description.

Step 301: after receiving signal, from antenna unit 201i, it is converted by analogy to digital (ADC), and sampled by $i^{th}$ radio frequency transceiver 203i, it outputs a digital signal, known as $s_i(m)$, where $m$ is $m^{th}$ sampling point; step 302: after digital signal $s_i(m)$ is synchronized and its over-sampling is eliminated by blocks 210, then a chip level digital signal is got, known as $s1_i(n)$, where $n$ represents $n^{th}$ chip; step 303: after chip level digital signal $s1_i(n)$ is de-scrambled and de-spread by block 205, then it is separated into $K$ numbers of code channel symbolic level signal, known as $x_{ki}(l)$, where $l$ represents $l^{th}$ symbol; step 304: the $K$ numbers of code channel symbolic level signal pass $K$ beam formers 206, respectively, with certain beam forming composite algorithm, the $i^{th}$ link receiving beam is formed and its composite result is got, it is represented as:

$$R_k(l) = \sum_{i=1}^{N} x_{ki}(l) * w_{ik}(l) \qquad (1)$$

where $k = 1, 2, ..., K$; $w_{ik}(l)$ is beam forming coefficient of $k^{th}$ code channel in $i^{th}$ link, when using maximum power composite algorithm,

$$w_{ik}(l) = x_{ki}*(l) \qquad (2)$$

where $x_{ki}*(l)$ is conjugate of complex number $x_{ki}(l)$, therefore beam forming matrix $W_k$ with symbolic level is got, where $R_k(l)$ is the output of smart antenna system.

In time division duplex (TDD) system, when up link (base station receiving) beam is formed, weight of each link can be directly used to down link (base station transmitting) beam forming, in this way advantage of smart antenna is fully got. After output $R_k(l)$, said above, is processed by such as demodulation etc., receiving signal can be got.

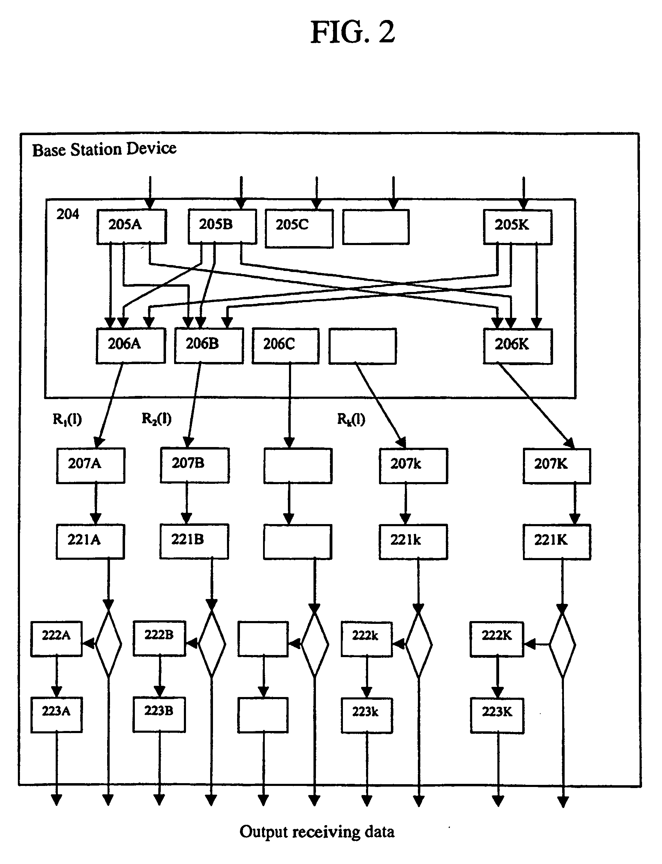

Referencing to Fig. 2 and 3, they show interference needed to be cancelled in base station of CDMA system with smart antenna, and new signal processing method related to the invention.

Step 306, smart antenna system output signal $R_k(l)$, outputted by baseband signal processor 204, is demodulated and signal/noise ratio of its training sequence is detected (training sequence in any mobile communication system is known, it can be got by a comparison) by $K$ demodulation units 207A, 207B, ..., 207K and $K$ signal/noise ratio (S/N) detection units 221A, 221B, ..., 221K; if the signal/noise ratio of output signal is greater than preset threshold (Fig. 3 step 307 and Fig. 2 diamond block), it means in corresponding code channel there is no error code or number of error code is less than set value, then step 308 can be executed: the receiving signal is directly outputted, received data is outputted and processing is ended; if the signal/noise ratio of output signal is less than preset threshold (Fig. 3 step 307 and Fig. 2 diamond block), then step 305 is executed: go to the next signal processing stage (if there is no training sequence in wireless communication system, then there is no need to detect signal/noise ratio in step 306 and 307).

Step 305, getting the input digital signal $NR_k(m)$ after beam forming, this is carried out in blocks 222A, 222B, ..., 222K. First, suppose processed code channel is the code channel used by $k^{th}$ user terminal, with got $k^{th}$ code channel beam forming matrix $w_{ik}(l)$, beam forming of received digital signal is made directly and a set of new data $NR_k(m)$ is formed:

$$NR_k(m) = \sum_{i=1}^{N} S_i(m) * w_{ik} \qquad (3)$$

where $k = 1, 2, ... , K$; $w_{ik}$ is mean value of $k^{th}$ code channel beam forming matrix within one frame, it is:

$$w_{ik} = \frac{1}{L}\left(\sum_{i=1}^{L} w_{ik}(l)\right) \qquad (4)$$

where $L$ is symbol number needed to be counted, obviously $L$ must be less or equal to symbol numbers of one frame; definition of $w_{ik}(l)$ is in formula (1); $s_i(m)$ is multiple channel CDMA signal received by $i^{th}$ link, as shown in Fig. 1.

The got new data signal $NR_k(m)$ is sent to $K$ multipath processors 223A, 223B, ..., 223K, it is processed with the new processing method of the invention; the processing procedure mainly includes: first step consists of steps 310 and 312, second step consists of step 314, third step consists of step 316 and fourth step consists of step 318; as shown in Fig. 3.

First step: cancel main path component comes from other users, it is included in signal level of $k^{th}$ beam of input digital signal $NR_k(m)$ after beam forming, its processing procedure is:

1) Calculate all other main path signal in $k^{th}$ beam, calculate other code channel signal level, which is in working code channel $k^{th}$ beam, i.e. calculate

$$F_v(l) = \sum_{i=1}^{N} x_{vi}(l) * w_{ik}(l) \qquad (5)$$

where $v = 1,2,...,K$ (excluding $v=k$), other code channel total power in $K^{th}$ code channel is

$$p_v = \sum_{i=1}^{N} F_v(l) * F_v*(l) \qquad (6)$$

where $F_v*(l)$ is conjugate of complex number $F_v(l)$, $L$ is symbol numbers needed to be counted, obviously $L$ should be less or equal to the symbol numbers of one frame. Then, compare $p_v$ with threshold value set by the system, if there are $U$ number of values are greater than threshold, called $U$ number of signals needed to be cancelled, then it means that there are $U$ number of signals cannot be cancelled by spatial filter of smart antenna. For $l^{th}$ symbol, this signal output can be represented as $F_u(l)$.

Making spread spectrum for $F_u(l)$ with $u^{th}$ spread spectrum code and getting the spread spectrum signal $f_u(n)$ after spread spectrum, solve mean amplitude, in $k^{th}$ link, of each signal needed to be cancelled:

$$u = \frac{1}{L}\left(\sum_{i=1}^{L} \frac{|F_u(l)|}{R_u(l)}\right) \qquad (7)$$

where $R_u(l)$ has been solved by formula (1), $u = 1,2, ..., U$.

Again, make spread spectrum for this signal and put the known scramble code on it, then its input digital signal is recovered:

$$s2_u(n) = u * f_u(n) * pn\_cod(n) \qquad (8)$$

2) In $NR_K(m)$, canceling other main path signals, then $NS_k(m)$ is got. Subtract interference from total input digital signal after beam forming, then input digital signal after beam forming, which only includes the needed code channel ($k^{th}$ channel) and all multipath interference, can be got:

$$NS_k(m) = NR_k(m) - \sum_{u=1}^{U} s2_u(m) \qquad (9)$$

Operations above are going on sampled level, signal $s2_u(n)$ should be transformed to sampled level, form $s2_u(m)$, here, it can be considered that every sampled value is evenly distributed.

Step 2, search and solve all multipath components in $NS_k(m)$. Search multipath components distributed on this formed beam direction; the searching is performed in the digital signal $NS_k(m)$ formed above, each time move one sample point m and get a new set $sl_{kj}(n)$; with known scramble code $pn\_code(n)$, correlated $y_{kj}(n)$ is got on symbol level and its total energy is calculated:

$$P_j = \sum_{i=1}^{M'} y_{kj}(n) * y_{kj}{}^*(n) \qquad (10)$$

where $M' = M - 1$, and $M$ is number of all chips for counted $L$ symbols. In the above formula, only $T$ numbers of interference whose energy exceeds threshold value are retained, then scramble $y_{kt}(n)$ with known scramble code $pn\_code(n)$ and get $t^{th}$ interference value in input data $s3_{kt}(n)$:

$$s3_{kt}(n) = y_{kt}(n) * pn\_code(n) \qquad (11)$$

Obviously, the searching is only made within one symbol, searching numbers needed equal to sample numbers in each chip times SF - 1, where SF is spread spectrum coefficient.

Step 3, cancel multipath signal. In $NS_k(m)$, cancel multipath signals coming from other user and get $SS_k(m)$. Subtract interference data signals exceeding threshold value from input data signal $NS_k(m)$ getting at step 2, then multipath interference signals coming from other users are canceled:

$$SS_k(m) = NS_k(m) - \sum_{t=1}^{T} s3_{kt}(m) \qquad (12)$$

The operation is going on at sample level, $s3_{kt}(n)$ should be transformed to sample level to form $s3_{kt}(m)$, here, it can be considered that each sample value is evenly distributed.

Step 4, get output $RS_k(l)$ after interference cancellation. From sample value $SS_k(m)$, in which multipath interference signals from other users have been canceled, each chip level digital signal value $s4_k(n)$ is got; main path signal of $k^{th}$ code channel is superposed with multipath signal, in phase coincidence, then with de-scrambling and de-spread spectrum using $k^{th}$ spread spectrum code, output signal $RS_k(l)$ after interference canceled can be got.

Further, demodulate in step 320, a result after interference cancellation is finally got; data is outputted and procedure is ended at step 308.

Obviously, the process said above should be done for the entire code channel which have error code, i.e. the process said above should be done $K$ times (signal-to-noise ratio greater than threshold value) to achieve the purpose of canceling interference for all code channel.

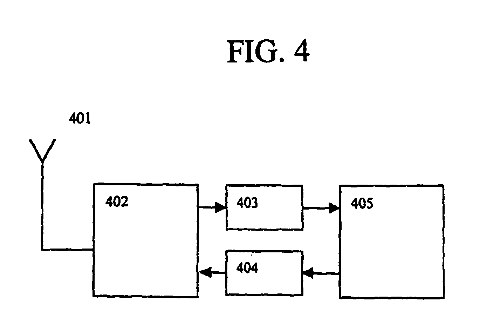

Referring to Fig. 4, it shows CDMA user terminal structure using method of the invention. It includes antenna 401, radio transceiver 402, analog to digital converter 403, digital to analog converter 404 and baseband signal processor 405. A method of the invention will be implemented in baseband signal processor 405.

In this structure, output of analog to digital converter 403 can be directly used for input digital signal $NR_k(m)$ mentioned above, then interference cancellation is made by first step to fourth step mentioned above. During first step, which cancels main path signals coming from other users, those main path signals $F_v(l)$ can be directly got by de-scrambling and de-spreading without using formula (5) mentioned above and it starts directly from formula (6) mentioned above.

In the invention method, beam forming is carried out at base station; when the invention method is used at user terminal, receiving signal received by user terminal itself is the mentioned digital signal $NR_k(m)$ after beam forming; according to numbers of code channel $k$ needed to be received by user terminal, with the four steps mentioned above, interference cancellation can be proceeded.

Although technology scheme of the invention mainly points to CDMA mobile communication system, but after simple variance it can be completely used in mobile communication system with frequency division multiple access and time division multiple access. Any technician, whose career is research and development radio communication system, after understanding principle of smart antenna and basic knowledge of digital signal processing, can design high quality smart antenna system according to the method proposed by the invention, and use it in various mobile communication system or radio user loop system.

The method of the invention is also a new digital signal processing method, which can be used in CDMA mobile communication system or other radio communication system; it makes the system uses smart antenna and at the same time interference of various multiple path propagation is canceled and have a better result.

## Claims

1. An interference cancellation method based on smart antenna, said method being applied in a base station of a CDMA communications system and said base station including N antenna units (201), N radio feeder cables (202), N radio transceivers (203) and a baseband signal processor (204), comprising:

   a) with a beam forming matrix of a $k^{th}$ code channel, obtained through receiving beam forming, making directly beam forming for sampling level digital signal of a radio receiver output, and after the beam forming obtaining a digital signal of K code channels $NR_k(m)$ (305), wherein $k$ represents code channel and m representing sample point;
   b) calculating a power of a main path signal for each code channel except the $k^{th}$ code channel, wherein a main path signal is a signal whose energy is greater than a threshold value (310), and then subtracting said main path signals from the digital signal $NR_k(m)$ to obtain a digital signal $NS_k(m)$ that only includes a main path and a multipath signal of $k^{th}$ code channel and multipath interference signal of other code channels (312);
   c) searching in said digital signal $NS_k(m)$ of Step b) to obtain multipath interference signal distributed on beam form direction of $k^{th}$ code channel and come from other code channels except code channel (314);
   d) subtracting digital signal $NS_k(m)$ of Step b) with said multipath interference signal coming from other code channels to obtain a sampling level digital signal of $k^{th}$ code channel that having canceled main path interference signals and multipath interference signals of other code channels (316);
   e) obtaining a code chip level digital signal from said sampling level digital signal of Step d) and superposing in phase coincidence main path and multipath signals of $k^{th}$ code channel, then de-scrambling, de-spreading and de-modulating said superposed signal to obtain a received signal, with interference canceled, of the $k^{th}$ code channel (318).

2. A method according to claim 1, **characterized** that said steps b), c) and d) are processed on a sampling level.

3. A method according to Claim 1, **characterized in that** calculating main path signals of each code channel except code channel in Step b), comprises:

   calculating a signal level, within said $k^{th}$ code channel beam form, of other code channels except $k^{th}$ code channel;
   calculating the power, within said $k^{th}$ code channel beam form, of each code channel except $k^{th}$ code channel, according to said signal level;
   comparing said power with a threshold set by said system, and if said power of a signal being greater than said threshold, then determining the signal to be a main interference signal to be canceled, from other code channels except $k^{th}$ code channel;
   spreading said signal to be canceled with a spread code, and adding a known scramble code to recover a main path signal, within $k^{th}$ code channel beam form, of other code channels except $k^{th}$ code channel.

4. A method according to Claim 1, **characterized in that** searching in said digital signal $NS_k(m)$ in Step c), comprises:

   obtaining a code chip level signal by moving sampling point position one by one within a symbol;
   calculating a correlation of said code chip level signal with a known scramble code and calculating total energy;

scrambling a signal, with total energy being greater than threshold, by a known scramble code and obtaining a multipath interference signal, distributed on beam form direction of $k^{th}$ code channel, of other code channels except $k^{th}$ code channel.

5. An interference cancellation method for a terminal of a CDMA communication system, it is **characterized** that comprising:

a) receiving a signal $NR_k(m)$ from a base station, wherein $NR_k(m)$ is a digital signal obtained through beam forming with a beam forming matrix of a $k^{th}$ code channel in the base station, with $k$ representing code channel and m representing sample point

b) calculating main path signals of other code channels except $k^{th}$ code channel, wherein a main path signal is a signal whose energy is greater than a threshold value, and subtracting said main path signals from other code channels from the digital signal $NR_k(m)$ received by said terminal to obtain a digital signal $NS_k(m)$ including only main path and multipath signals of $k^{th}$ code channel and multipath interference signals from other code channels,;

c) searching in said digital signal $NS_k(m)$ of Step b) to obtain a multipath interference signal, distributed on beam form direction of $K^{th}$ code channel and come from other code channels except $k^{th}$ code channel;

d) subtracting said digital signal $NS_k(m)$ of Step b) with said multipath interference signal from other code channels to obtain a sampling level digital signal of the $k^{th}$ code channel having canceled main path interference signals and multipath interference signals from other code channels except $K^{th}$ code channel;

e) obtaining a code chip level digital signal from said sampling level digital signal of Step c) and superposing in phase coincidence main path and multipath signals of $k^{th}$ code channel, then de-scrambling, de-spreading and de-modulating said superposed signal to obtain a receiving signal with interference canceled of $k^{th}$ code channel.

6. A method according to Claim 5, **characterized** that calculating main path signals of other code channels except $k^{th}$ code channel in Step b), comprises:

calculating a signal level, within said $k^{th}$ code channel beam form, of other code channels except $k^{th}$ code channel;

calculating the power of other each channels except $k^{th}$ code channel, according to said signal level;

comparing said power with a threshold set by said system, and if said power of a signal being greater than said threshold, then determining the signal being a main interference signal to be canceled, from other code channels except $k^{th}$ code channel;

spreading said signal to be canceled with a spread code, and adding a known scramble code to recover a main path signal, within k<sup>th</sup> code channel beam form, of other code channels except k<sup>th</sup> code channel.

7. A method according to Claim 5, **characterized** that searching in said digital signal $NS_k(m)$ in Step c), comprises:

obtaining a code chip level signal by moving sampling point position one by one within a symbol;

calculating a correlation of said code chip level signal with a known scramble code and calculating total energy;

scrambling a signal, with total energy being greater than threshold, by a known scramble code and obtaining a multipath interference signal, distributed on beam form direction of $k^{th}$ code channel, of other code channels except $k^{th}$ code channel.

**Patentansprüche**

1. Entstörungsverfahren auf der Grundlage von smarten Antennen, wobei das Verfahren in einer Basisstation eines CDMA-Kommunikationssystems angewendet ist und die Basisstation N Antenneneinheiten (201), N Funkzuleitungskabel (202), N Funktransceiver (203) und einen Basisbandsignalprozessor (204) umfaßt, umfassend:

a) mit einer Strahlbildungsmatrix eines $k^{ten}$ Codekanals, durch Empfangsstrahlbildung erhalten, Erzeugen einer direkten Strahlbildung für ein digitales Abtastpegelsignal einer Funkempfängerausgabe, und nach der Strahlbildung Erhalten eines digitalen Signals von K Codekanälen $NR_k(m)$ (305), wobei $k$ den Codekanal repräsentiert und m den Abtastpunkt repräsentiert;

b) Berechnen einer Energie eines Hauptwegsignals für jeden Codekanal, außer dem $k^{ten}$ Codekanal, wobei ein Hauptwegsignal ein Signal ist, dessen Energie größer als ein Schwellwert (310) ist, und dann Subtrahieren der Hauptwegsignale vom digitalen Signal $NR_k(m)$, um ein digitales Signal $NS_k(m)$ zu erhalten, das nur ein Hauptweg- und ein Mehrwegesignal des $k^{ten}$ Codekanals und Mehrwegestörsignal anderer Codekanäle (312) umfaßt;

c) Suchen im digitalen Signal $NR_k(m)$ von Schritt b), um ein Mehrwegestörsignal zu erhalten, das in Strahlbildungsrichtung des $k^{ten}$ Codekanals verbreitet ist und von anderen Codekanälen als dem $k^{ten}$ Codekanal (314) kommt;

d) Subtrahieren des digitalen Signals $NS_k(m)$ von Schritt b) mit Mehrwegestörsignal, das von anderen Codekanälen kommt, um ein digitales Abtastpegelsignal des $k^{ten}$ Codekanals zu erhalten, das die Hauptwegestörsignale und die Mehrwegestörsignale anderer Codekanäle (316) gelöscht hat;

e) Erhalten eines digitalen Codechippegelsignals aus dem digitalen Abtastpegelsignal von Schritt d) und Überlagern phasengleicher Koinzidenz-Hauptweg- und -Mehrwegesignale des $k^{ten}$ Codekanals, dann Entschlüsseln, Ausbreiten und Demodulieren des überlagerten Signals, um ein empfangenes Signal, bei gelöschten Störungen, des $k^{ten}$ Codekanals (318) zu erhalten.

**2.** Verfahren nach Anspruch 1, **dadurch gekennzeichnet, daß** die Schritte b), c) und d) auf einem Abtastpegel verarbeitet werden.

**3.** Verfahren nach Anspruch 1, **dadurch gekennzeichnet, daß** das Berechnen der Hauptwegsignale jedes Codekanals außer dem $k^{ten}$ Codekanal in Schritt b) folgendes umfaßt:

Berechnen eines Signalpegels, innerhalb der $k^{ten}$ Codekanalstrahlform, anderer Codekanäle als dem $k^{ten}$ Codekanal;

Berechnen der Energie, innerhalb der $k^{ten}$ Codekanalstrahlform, jedes Codekanals außer dem $k^{ten}$ Codekanal entsprechend dem Signalpegel;

Vergleichen der Energie mit einem Schwellwert, der durch das System eingestellt ist, und wenn die Energie eines Signals größer als der Schwellwert ist, dann Bestimmen des Signals, das ein Hauptstörsignal ist, das gelöscht werden soll, von anderen Codekanälen als dem $k^{ten}$ Codekanal;

Verbreiten des Signals, das gelöscht werden soll, mit einem Ausbreitungscode und Hinzufügen eines bekannten Verschlüsselungscodes, um ein Hauptwegsignal, innerhalb der $k^{ten}$ Codekanalstrahlform, anderer Codekanäle als dem $k^{ten}$ Codekanal zu gewinnen.

**4.** Verfahren nach Anspruch 1, **dadurch gekennzeichnet, daß** das Suchen im digitalen Signal $NS_k(m)$ in Schritt c) folgendes umfaßt:

Erhalten eines Codechippegelsignals durch schrittweises Bewegen der Abtastpunktposition innerhalb eines Symbols;

Berechnen einer Korrelation des Codechippegelsignals mit einem bekannten Verschlüsselungscode und Berechnen der Gesamtenergie;

Verschlüsseln eines Signals, bei dem die Gesamtenergie größer als der Schwellwert ist, durch einen bekannten Verschlüsselungscode und Erhalten eines Mehrwegestörsignals, das auf einer Strahlformrichtung des $k^{ten}$ Codekanals verteilt ist, anderer Codekanälen als dem $k^{ten}$ Codekanal.

**5.** Entstörungsverfahren für ein Terminal eines CDMA-Kommunikationssystems, das **dadurch gekennzeichnet ist, daß** es folgendes umfaßt:

a) Empfangen eines Signals $NR_k(m)$ von einer Basisstation, wobei $NR_k(m)$ ein digitales Signal ist, das durch Strahlbildung mit einer Strahlbildungsmatrix eines $k^{ten}$ Codekanals in der Basisstation erhalten ist, wobei k den Codekanal repräsentiert und m den Abtastpunkt repräsentiert,

b) Berechnen der Hauptwegsignale anderer Codekanäle als dem $k^{ten}$ Codekanal, wobei ein Hauptwegsignal ein Signal ist, dessen Energie größer als ein Schwellwert ist, und Subtrahieren der Hauptwegsignale aus anderen Codekanälen von dem digitalen Signal $NR_k(m)$, das durch das Terminal empfangen ist, um ein digitales Signal $NS_k(m)$ zu erhalten, das nur Hauptweg- und Mehrwegesignale des $k^{ten}$ Codekanals und Mehrwegestörsignale von anderen Codekanälen enthält;

c) Suchen im digitalen Signal $NS_k(m)$ von Schritt b), um ein Mehrwegestörsignal zu erhalten, das in Strahlbildungsrichtung des $k^{ten}$ Codekanals verteilt ist und von anderen Codekanälen als dem $k^{ten}$ Codekanal kommt;

d) Subtrahieren des digitalen Signals $NS_k(m)$ von Schritt b) mit Mehrwegestörsignal von anderen Codekanälen, um ein digitales Abtastpegelsignal des $k^{ten}$ Codekanals zu erhalten, bei dem die Hauptwegstörsignale und Mehrwegestörsignale von anderen Codekanälen als dem $k^{ten}$ Codekanal ausgelöscht sind;

e) Erhalten eines digitalen Chippegelsignals aus dem digitalen Abtastpegelsignal von Schritt c) und Überlagern phasengleicher Koinzidenz-Hauptweg- und -Mehrwegesignale des $k^{ten}$ Codekanals, dann Entschlüsseln, Ausbreiten und Demodulieren des überlagerten Signals, um ein Empfangssignal mit gelöschten Störungen des $k^{ten}$ Codekanals zu erhalten.

6. Verfahren nach Anspruch 5, **dadurch gekennzeichnet, daß** das Berechnen der Hauptwegsignale anderer Codekanäle als dem $k^{ten}$ Codekanal in Schritt b) folgendes umfaßt:

Berechnen eines Signalpegels, innerhalb der $k^{ten}$ Codekanalstrahlform, von anderen Codekanälen als dem $k^{ten}$ Codekanal;
Berechnen der Energie jedes anderen Codekanals als dem $k^{ten}$ Codekanal entsprechend dem Signalpegel;
Vergleichen der Energie mit einem Schwellwert, der durch das System festgelegt ist, und wenn die Energie eines Signals größer als der Schwellwert ist, dann Bestimmen des Signals, das ein Hauptstörsignal ist, das gelöscht werden soll, aus anderen Codekanälen als dem $k^{ten}$ Codekanal;
Verbreiten des Signals, das gelöscht werden soll, mit einem Ausbreitungscode und Hinzufügen eines bekannten Verschlüsselungscode, um ein Hauptwegsignal, innerhalb der $k^{ten}$ Codekanalstrahlform, anderer Codekanäle als dem $k^{ten}$ Codekanal zu gewinnen.

7. Verfahren nach Anspruch 5, **dadurch gekennzeichnet, daß** das Suchen im digitalen Signal $NS_k(m)$ in Schritt c) folgendes umfaßt:

Erhalten eines Codechippegelsignals durch schrittweises Bewegen der Abtastpunktposition innerhalb eines Symbols;
Berechnen einer Korrelation des Codechippegelsignals mit einem bekannten Verschlüsselungscode und Berechnen der Gesamtenergie;
Verschlüsseln eines Signals, mit einer Gesamtenergie, die größer als der Schwellwert ist, durch einen bekannten Verschlüsselungscode und Erhalten eines Mehrwegestörsignals, das auf der Strahlformrichtung des $k^{ten}$ Codekanals verteilt ist, von anderen Codekanälen als dem $k^{ten}$ Codekanal.

## Revendications

1. Procédé d'élimination d'interférence sur la base d'une antenne intelligente, ledit procédé étant appliqué dans une station de base d'un système de communication CDMA et ladite station de base comprenant N unités d'antenne (201), N câbles d'antenne radio (202), N émetteurs-récepteurs radio (203), et un processeur de signal de bande de base (204), comprenant:

a) avec une matrice de formation de signaux d'un $k^{ième}$ canal de code, obtenue grâce à la formation d'un faisceau de réception, élaboration directe de la formation du faisceau pour échantillonner un signal numérique de niveau d'une sortie de récepteur radio, et après la formation du faisceau, obtention d'un signal numérique de K canaux de code $NR_k(m)$ (305), où $k$ représente le canal de code et m représentant un point d'échantillon;
b) calcul d'une puissance d'un signal de trajet principal pour chaque canal de code sauf le $k^{ième}$ canal de code, où un signal de trajet principal est un signal dont l'énergie est plus grande qu'une valeur de seuil (310), et soustraction desdits signaux de trajet principal du signal numérique $NR_k(m)$ pour obtenir un signal numérique $NS_k(m)$ qui comprend seulement un trajet principal et un signal multi-trajet du $k^{ième}$ canal de code et un signal d'interférence multi-trajet d'autres canaux de code (312);
c) recherche dans ledit signal numérique $NS_k(m)$ de l'étape b) pour obtenir un signal d'interférence multi-trajet distribué sur une direction de forme de faisceau du $k^{ième}$ canal de code et venant à partir d'autres canaux de code sauf le $k^{ième}$ canal de code (314);
d) soustraction du signal numérique $NS_k(m)$ de l'étape b) avec ledit signal d'interférence multi-trajet venant d'autres canaux de code pour obtenir un signal numérique de niveau d'échantillonnage du $k^{ième}$ canal de code ayant des signaux d'interférence de trajet principaux éliminés et des signaux d'interférence multi-trajet d'autres canaux de code (316);
e) obtention d'un signal numérique de niveau de puce de code à partir dudit signal numérique de niveau d'échantillon de l'étape d) et superposition des signaux de la coïncidence en phase de trajet principal et multi-trajet du $k^{ième}$ canal de code, puis désembrouillage, désétalement et démodulation dudit signal superposé pour obtenir un signal reçu, avec une interférence éliminée du $k^{ième}$ canal de code (318).

2. Procédé selon la revendication 1, **caractérisé en ce que** les étapes b), c), et d) sont traitées sur un niveau d'échantillonnage.

3. Procédé selon la revendication 1, **caractérisé en ce que** le calcul des signaux de trajet principal et de chaque canal de code sauf le $k^{ième}$ canal de code dans l'étape b), comprend:

le calcul d'un niveau de signal, dans ladite forme de faisceau de $k^{ième}$ canal de code d'autres canaux de code sauf le $k^{ième}$ canal de code;
le calcul de la puissance, dans ladite forme de faisceau de k$^{ième}$ canal de code, de chaque canal de code sauf le $k^{ième}$ canal de code, selon ledit niveau de signal;
la comparaison de ladite puissance avec un seuil réglé par ledit système, et si ladite puissance d'un signal est plus grande que ledit seuil, alors détermination du signal pour être un signal d'interférence principal à éliminer, à partir d'autres canaux de code sauf le $k^{ième}$ canal de code;
l'étalement dudit signal à éliminer avec un code d'étalement, et addition d'un code d'étalement connu pour récupérer un signal de trajet principal, avec la forme de faisceau de $k^{ième}$ canal de code, d'autres canaux de code sauf le $k^{ième}$ canal de code.

4. Procédé selon la revendication 1, **caractérisé en ce que** la recherche dans ledit signal numérique $NS_k(m)$ dans l'étape c) comprend:

l'obtention d'un signal de niveau de puce de code en déplaçant la position du point d'échantillonnage une par une dans un symbole;
le calcul d'une corrélation dudit signal de niveau de puce de code avec un code d'échantillonnage connu et calcul de l'énergie totale;
l'échantillonnage d'un signal, avec l'énergie totale plus grande que le seuil, par un code d'échantillonnage connu et obtention d'un signal d'interférence multi-trajet, distribué sur une direction de forme de faisceau du $k^{ième}$ canal de code, d'autres canaux de code sauf le $k^{ième}$ canal de code.

5. Procédé d'élimination d'interférence pour un terminal d'un système de communication CDMA, **caractérisé en ce qu'**il comprend:

a) la réception d'un signal $NR_k(m)$ à partir d'une station de base, où $NR_k(m)$ est un signal numérique obtenu grâce à la formation du faisceau avec une matrice de formation du faisceau d'un $k^{ième}$ canal de code dans la station de base, avec $k$ représentant un canal de code et m représentant le point d'échantillonnage
b) le calcul des signaux de trajet principal à partir d'autres canaux de code sauf le $k^{ième}$ canal de code, où un signal de trajet principal est un signal dont l'énergie est plus grande qu'une valeur de seuil, et soustraction desdits signaux de trajet principal à partir d'autres canaux de code du signal numérique $NR_k(m)$ reçu par ledit terminal pour obtenir un signal numérique $NS_k(m)$ comprenant seulement un trajet principal et des signaux multi-trajet de $k^{ième}$ canal de code et des signaux d'interférence multi-trajet à partir d'autres canaux de code;
c) la recherche dans ledit signal numérique $NS_k(m)$ de l'étape b) pour obtenir un signal d'interférence multi-trajet, distribué sur une direction de forme de faisceau de $k^{ième}$ canal de code et venant d'autres canaux de code sauf le $k^{ième}$ canal de code;
d) la soustraction dudit signal numérique $NS_k(m)$ de l'étape d) avec ledit signal d'interférence multi-trajet d'autres canaux de code pour obtenir un signal numérique de niveau d'échantillonnage du $k^{ième}$ canal de code ayant des signaux d'interférence de trajet principal éliminés et des signaux d'interférence multi-trajet à partir d'autres canaux de code sauf le $k^{ième}$ canal de code;
e) l'obtention d'un signal numérique de niveau de puce de code à partir dudit signal numérique de niveau d'échantillonnage de l'étape c) et superposition des signaux de coïncidence en phase de trajet principal et multi-trajet du $k^{ième}$ canal de code, puis désembrouillage, désétalement et démodulation dudit signal superposé pour obtenir un signal de réception avec l'interférence éliminée du $k^{ième}$ canal de code.

6. Procédé selon la revendication 5, **caractérisé en ce que** le calcul des signaux de trajet principal et d'autres canaux de code sauf le $k^{ième}$ canal de code dans l'étape b), comprend: *

le calcul d'un niveau de signal, dans ladite forme de faisceau de $k^{ième}$ canal de code, d'autres canaux de code sauf le $k^{ième}$ canal de code;
le calcul de la puissance de chaque autre canal sauf le $k^{ième}$ canal de code, selon ledit niveau de signal;
la comparaison de ladite puissance avec un seuil réglé par ledit système, et si ladite puissance d'un signal est plus grande que ledit seuil, alors détermination du signal étant un signal d'interférence principal à éliminer, à partir d'autres canaux de code sauf le $k^{ième}$ canal de code;
l'étalement dudit signal à éliminer avec un code d'étalement, et addition d'un code de brouillage connu pour récupérer un signal de trajet principal, dans la forme de faisceau du $k^{ième}$ canal de code, d'autres canaux de code sauf le $k^{ième}$ canal de code.

**7.** Procédé selon la revendication 5, **caractérisé en ce que** la recherche dans ledit signal numérique $NS_k(m)$ dans l'étape c), comprend:

l'obtention d'un signal de niveau de puce de code en déplaçant une position de point d'échantillonnage une par une dans un symbole;
le calcul d'une corrélation dudit signal de niveau de puce de code avec un code de brouillage connu et calcul d'une énergie totale;
le brouillage d'un signal, avec l'énergie totale étant plus grande qu'un seuil, par un code de brouillage connu et obtention d'un signal d'interférence multi-trajet, distribué sur une direction de forme de faisceau du $k^{ième}$ canal de code, d'autres canaux de code sauf le $k^{ième}$ canal de code.

# FIG. 1

# FIG. 2

Base Station Device

204
205A  205B  205C  205K

206A  206B  206C  206K

$R_1(l)$  $R_2(l)$  $R_k(l)$

207A  207B  207k  207K

221A  221B  221k  221K

222A  222B  222k  222K

223A  223B  223k  223K

Output receiving data

# FIG. 3

A/D convert, over-sample, get *si(m)* — 301

↓

get chip level digital signal *sli(n)* — 302

↓

de-scramble, de-spread, get *xki(l)* — 303

↓

306 — demodulate and detect signal-to-noise ratio ← beam forming, get signal *Rk(l)* and beam forming matrix *Wk* — 304

↓

307 — greater then threshold? —N→ get input digital signal *NRk(m)* after beam forming — 305

Y ↓

308 — output data and end

↑

320 — demodulate

↑

318 — get chip level digital signal *s4k(n)*; de-scramble, de-spread, get *RSk(l)*

← 

223K

get all other main path signal in *k^th* beam — 310

↓

in *NRk(m)*, cancel other main path signal, get *NSk(m)* — 312

↓

search in *NSk(m)* and get all multipath signal — 314

↓

in *NSk(m)*, cancel other multipath signal: get *SSk(m)* — 316

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 97104039

- US 5621752 A

### Non-patent literature cited in the description

- **BLANZ, J.J. ; SCHMALENBERGER, R ; PAPATHANASSIOU, A ; JUNG, P.** Smart antenna concepts for time-slotted CDMA. *VEHICULAR TECHNOLOGY CONFERENCE,* 04 May 1997, vol. 1, 11-15

- **BLANZ, J ; KLEIN, A ; NASSHAN, M ; STEIL, A.** Performance of a cellular hybrid C/TDMA mobile radio system applying joint detection and coherent receiver antenna diversity. *SELECTED AREAS IN COMMUNICATIONS, IEEE JOURNAL ON,* vol. 12 (4), 568-579